Europäisches Patentamt

(19) European Patent Office

Office européen des brevets

(11) EP 0 786 512 A2

(12) EUROPEAN PATENT APPLICATION

(43) Date of publication:
30.07.1997 Bulletin 1997/31

(51) Int. Cl.$^6$: **C10M 171/00**, C10M 105/38, C09K 5/04

(21) Application number: 97201035.9

(22) Date of filing: 03.12.1992

(84) Designated Contracting States:
AT BE CH DE DK ES FR GB IT LI LU NL SE

(30) Priority: 06.12.1991 US 804314

(62) Document number(s) of the earlier application(s) in accordance with Art. 76 EPC:
92925481.1 / 0 618 957

(71) Applicant: EXXON CHEMICAL PATENTS INC.
Linden New Jersey 07036 (US)

(72) Inventors:
 • Schlosberg, Richard Henry
   Bridgewater, New Jersey 08807 (US)
 • Turner, David Wayne
   Baton Rouge, Louisiana 70816 (US)
 • Antika, Shlomo
   Maplewood, New Jersey 07040 (US)
 • Krevalis, Martin Anthony, Jr.
   Baton Rouge, Louisiana 70808 (US)

(74) Representative: Bawden, Peter Charles et al
   EXXON CHEMICAL LIMITED
   Exxon Chemical Technology Centre
   PO Box 1
   Abingdon Oxfordshire OX13 6BB (GB)

Remarks:
This application was filed on 14 - 04 - 1997 as a divisional application to the application mentioned under INID code 62.

(54) **Refrigeration working fluid compositions**

(57) There are disclosed refrigeration working fluid compositions comprising tetrafluoroethane refrigerants and certain polyol esters of $C_7$-$C_{10}$ branched alkanoic acids or mixtures of such branched acids with linear $C_7$-$C_{10}$ monoalkanoic acids. The polyols are mono-, di- or technical grade pentaerythritol or trimethylolpropane; the esters exhibit suitable viscosity ranges and miscibility with refrigerants over a broad compositional range. The acids have a defined average effective carbon chain length and a certain degree of methyl branching for polyols other than trimethylolpropane.

EP 0 786 512 A2

## Description

BACKGROUND OF THE INVENTION

Field of the Invention

The invention relates to refrigeration working fluid compositions. More particularly this invention relates to refrigeration working fluid compositions comprising mixtures of fluorocarbon refrigerant and certain polyol ester lubricants having suitable viscosities and which are miscible with the refrigerant at low temperatures.

Description of Related Art

Cooling systems of the mechanical vapor recompression type, including refrigerators, freezers, heat pumps, air conditioning systems, and the like, are well known. In such devices, a refrigerant of suitable boiling point evaporates at low pressure, taking heat from the surrounding zone. The resulting vapor is then compressed and passed to a condenser where it condenses and gives off heat to a second zone. The condensate is then returned through an expansion valve to the evaporator, so completing the cycle.

It is recognized that currently used refrigerants which contain chlorine, such as dichlorodifluoromethane, will be replaced by chlorine-free refrigerant fluids because of the adverse effect of the chlorinated materials upon the atmospheric ozone layer. Tetrafluoroethane isomers and in particular "Refrigerant 134a", which is 1,1,1,2-tetrafluoroethane, are now considered desirable fluids for use in refrigeration systems.

Refrigeration working fluids are required to have a lubricant which is compatible and miscible with the refrigerant so that moving parts of the system are properly lubricated. Heretofore, such lubricants have been composed of hydrocarbon mineral oils which are miscible with the chlorine-containing refrigerant fluids and which provide effective lubrication.

The use of tetrafluoroethane refrigerants has created a need for new lubricants, since mineral oils are not compatible with these materials. This need is well recognized in the art and there are numerous recent publications and patents disclosing various types of synthetic lubricants which are said to be compatible with tetrafluoroethane refrigerant fluids. Esters of polyols are being particularly emphasized as being suitable for use with the tetrafluoroethane refrigerants, especially Refrigerant 134a.

U. S. Patent 5,021,179, issued June 4, 1991 to Zehler et al., discloses esters of polyols in which the acyl groups have at least 22% of (a) branched acyl groups or (b) acyl groups which contain no more than six carbon atoms. This patent also indicates that the esters have a certain ratio of the number percent of acyl groups that have 8 or more carbon atoms and are unbranched to the number percent of acyl groups that are branched and contain not more than 6 carbon atoms, and that this ratio is not greater than 1.56. Also, the patent requires that the number percent of acyl groups having at least 9 carbon atoms, branched or not branched, will be not greater than 81.

PCT Application WO 90/12849 published November 1, 1990 by Jolley et al. discloses generally liquid compositions containing a major amount of at least one fluorine containing hydrocarbon containing one or two carbon atoms and a minor amount of at least one soluble organic lubricant comprising at least one carboxylic ester of a polyhydroxy compound containing at least two hydroxy groups and having the formula $R[OC(O)R']_n$ where R is hydrocarbyl, each R' is independently hydrogen, straight chain lower hydrocarbyl, a branched chain hydrocarbyl group, or a straight chain hydrocarbyl group containing from 8 to about 22 carbon atoms, provided that at least one R' group is hydrogen, a lower straight chain hydrocarbyl or a branched chain hydrocarbyl group, or a carboxylic acid-containing or carboxylic acid ester-containing hydrocarbyl group, and n is at least 2.

U.K. Patent 2,216,541, issued October 23, 1991, to Imperial Chemical Industries and published October 11, 1989, discloses the use of any ester of molecular weight 250 or greater as being suitable for use as compatible lubricants with Refrigerant 134a (R134a) and some related refrigerant fluids. The patent exemplifies adipates, pyromellitates and benzoates.

European Published Patent Application 440069 published August 7, 1991 by Kao Corporation discloses refrigeration working fluids composed of fluoroethanes and esters prepared by reacting an aliphatic polyol and a straight or branched chain alcohol with an aliphatic polycarboxylic acid having 2 to 10 carbon atoms.

European Published Application 415778 published March 6, 1991 by Kao Corporation discloses refrigeration working fluid composition containing hydrogenated fluoroethane and an ester compound obtained from an aliphatic polyhydric alcohol, a saturated aliphatic dicarboxylic acid and a saturated aliphatic monocarboxylic acid.

European Published Application 406479 published January 9, 1991, by Kyodo Oil Technical Research Center Co., Ltd., discloses lubricants which are said to be compatible with R134a. Suitable lubricants are: esters of neopentyl glycol and a straight or branched-chain monovalent fatty acid having 3-18 carbon atoms; esters of pentaerythritol, dipentaerythritol and tripentaerythritol with straight or branched chain $C_2$-$C_{18}$ monovalent fatty acids; esters of a trihydroxy polyvalent alcohol of the formula $RC(CH_2OH)_3$ where R is $C_1$-$C_3$ alkyl with a straight or branched-chain monovalent fatty acid having 2-18 carbon atoms and not more than 25 mol% per total fatty acid of at least one polybasic acid having carbon number of 4-36.

European Published Application 435253 published July 3, 1991 by Nippon Oil Co., Ltd. discloses a number of esters said to be compatible with R134a, the esters being defined as having specific structures and being esters of mono-, di- and tri-pentaerythritol and other polyols such as trimethylolethane, trimethylolpropane, trimethylolbutane or dimers or trimers thereof with monocarboxylic acids having 2-15 carbon atoms and dicarboxylic acids having 2-10 carbon atoms. The esters are generally said to have molecular weights of about 200-3000.

European Published Application 430657 published June 5, 1991 by Ashai Denka Kogyo Kabushiki discloses lubricants compatible with R134a which are characterized as being neopentyl polyol ester of a fatty acid having 2 to 6 carbon atoms. It is said in this publication that the use of acids having 7 or more carbon atoms will result in incompatibility if the amount of $C_2$-$C_6$ acids is not 20 mol% or greater such that the average number of carbon atoms of the fatty acids per hydroxyl group of the neopentylpolyol is 6 or below. Suitable neopentyl polyols include mono-, di and tri- pentaerythritol, trimethylolpropane, and trimethylolethane. The polyols must have at least 3 OH groups.

Other references dealing with the problem of R134a lubricant compatibility are U.S. Patent 4,851,144, issued July 25, 1989 to McGraw et al. which discloses mixtures of polyether polyols and esters as lubricants and U.S. Patent 4,755,376, issued July 5, 1988 to Magid et al. which discloses polyether glycols are lubricants for tetrafluoroethane refrigerants.

The prior art summarized above presents a conflicting picture of which lubricants are suitable for use with tetrafluoroethane refrigerants and particularly R-134a, 1,1,1,2-tetrafluoroethane. The present inventors have found that, with respect to polyol esters of alkanoic acids, their suitability for use as compatible lubricants with tetrafluoroethane refrigerants, in particular R134a, is governed by certain parameters related to the structure and chain length of acids used to esterify the polyols and that these parameters have not been recognized by the extensive prior art teachings in the field.

## SUMMARY OF THE INVENTION

The present invention is based on the discovery that esters of monopentaerythritol, technical grade pentaerythritol (which contains 7-14% by weight dipentaerythritol, up to 2% tripentaerythritol and the balance monopentaerythritol), and trimethylolpropane will provide esters having suitable viscosity ranges and miscibility values of -20°C when used with certain $C_7$-$C_{10}$ branched monoalkanoic acids or mixtures of $C_7$-$C_{10}$ branched and linear monoalkanoic acids, provided the acid mixture has a certain effective carbon chain length and, when esters of mono, di- or tri-pentaerythritol are used, a minimum amount of methyl branching as defined below. The allowed maximum value for the effective carbon chain length varies with the particular polyol used. The selection of a particular polyol is dependent upon the ester lubricant viscosity which one needs to obtain, and the viscosity depends upon the end use application for the refrigerant lubricant composition, which mixtures are referred to herein as refrigeration working fluids, i.e., admixtures of refrigerant, e.g., R134a, and polyol ester lubricant.

## DETAILED DESCRIPTION OF THE INVENTION

This invention is further based on the discovery that the use of branched $C_7$-$C_{10}$ monocarboxylic acids having a certain effective carbon chain length and, except for trimethylolpropane esters, a degree of methyl branchiness is required and provides to the ester lubricant both the desired viscosity range at 40°C and suitable miscibility with tetrafluoroethane refrigerants, preferably R134a, at low temperatures, i.e., -20°C or less. While R134a is the preferred refrigerant for use in this invention, the term "tetrafluoroethane" as used herein is meant to apply to both $CF_3CH_2F$ and $CHF_2CHF_2$. Effective carbon chain length as used herein refers to the length of the longest continuous carbon chain in the acid molecule. For example, a trimethylhexanoic acid, which has a total of 9 carbon atoms, has an effective carbon chain length of 6.0. For mixtures of acids, the average effective carbon chain length is calculated as explained below.

A first embodiment of this invention is a refrigeration working fluid comprising about 5-55 parts by weight of a synthetic ester lubricant and about 95-45 parts by weight of a tetrafluoroethane refrigerant, the ester having a viscosity range of from about 26 cSt. to 114 cSt. at 40°C and the working fluid having a miscibility value of -20°C or less (meaning a lower temperature), where the ester is prepared by reacting monopentaerythritol (as used herein this refers to a purity of 95% by weight or more, preferably 97.5% by weight or more, monopentaerythritol) with (a) a branched $C_7$-$C_{10}$ alkyl monocarboxylic acid or (b) a mixture of up to 73% by weight of a linear $C_7$-$C_{10}$ alkyl monocarboxylic acid and 27% by weight or more of a branched $C_7$-$C_{10}$ alkyl monocarboxylic acid, said branched acid containing 50% or more methyl branches based on the total number of branched alkyl groups in the acid molecule and said branched acid or acid mixture having an average effective carbon chain length equal to or less than 6.2.

Another embodiment of the invention is a refrigeration working fluid comprising about 5-55 parts by weight of a synthetic ester lubricant and about 95-45 parts by weight of a tetrafluoroethane refrigerant, the ester having a viscosity range of from about 27 cSt. to 130 cSt. at 40°C, and the working fluid having a miscibility value of -20°C or less, wherein the ester is prepared by reacting technical grade pentaerythritol with (a) a branched $C_7$-$C_{10}$ alkyl monocarboxylic acid or (b) a mixture of up to 67% by weight of a linear $C_7$-$C_{10}$ alkyl monocarboxylic acid and 33% or more of a branched $C_7$-$C_{10}$ monocarboxylic acid, said branched acid containing 50% or more methyl branches, based on the total number of branched alkyl groups in the acid molecule, and said branched acid or acid mixture having an average effective carbon chain length equal to or less than 6.0, and said technical grade pentaerythritol containing 85-92% by weight monopentaerythritol, 14-7% by weight dipentaerythritol and up to 2% by weight tripentaerythritol.

Another embodiment of the invention is a refrigeration working fluid comprising about 5-55 parts by weight of a synthetic ester lubricant and about 95-45 parts by weight of a tetrafluoroethane refrigerant, the ester having a viscosity range of from about 10 cSt. to 55 cSt. at 40°C and the working fluid having a miscibility value of -20°C or less, where the ester is prepared by reacting trimethylolpropane with (a) a branched $C_7$-$C_{10}$ alkyl monocarboxylic acid or (b) a mixture of up to 85% by weight of a linear $C_7$-$C_{10}$ alkyl monocarboxylic acid and 15% by weight or more of a branched alkyl monocarboxylic acid, and said branched acid or acid mixture having an average effective carbon chain length equal to or less than 7.0. While branched acids are required, it has been found that methyl branching is not essential when trimethylolpropane is the polyol used.

Another embodiment of the invention is a refrigeration working fluid composition comprising about 5-55 parts by weight of a synthetic ester lubricant and about 95-45 parts by weight of a tetrafluorethane refrigerant, the ester having a viscosity range of from about 80 cSt. to 120 cSt. at 40°C and the working fluid having a miscibility value of -15°C or less, wherein the ester is prepared by reacting dipentaerythritol with (a) a branched $C_7$-$C_{10}$ alkyl monocarboxylic acid or (b) a mixture of 90% by weight or more of a branched $C_7$-$C_{10}$ alkyl monocarboxylic acid and up to 10% by weight of a linear $C_7$-$C_{10}$ alkyl monocarboxylic acid, the branched acid containing 50% or more branched methyl groups based on the number of branched alkyl groups in the acid molecule said branched acid or acid mixture having an effective carbon chain length equal to or less than 5.7. This embodiment is applicable to working fluids where miscibility values of -15°C are suitable, such as automobile air conditioning systems.

As used herein, the term "miscibility value" refers to the highest temperature at which immiscibility occurs over the composition range of 5-55 parts by weight of synthetic ester lubricant and 95-45 parts by weight of tetrafluoroethane.

Miscibility and immiscibility is determined in the following manner. A measured quantity of ester lubricant is poured into a valved glass tube of 12 mm I.D. The tube is connected to a R134a refrigerant charging unit, where air is evacuated and a set volume of refrigerant is condensed into the glass tube until a desired refrigerant gas pressure drop is obtained. The composition of the lubricant/refrigerant mixture is calculated from weight measurements taken of the tube, tube plus lubricant, and tube plus lubricant plus refrigerant. The tube containing the lubricant/refrigerant is visually observed for miscibility at room temperature, in a high temperature visibility bath where the temperature is thermostatically controlled up to +60°C, and in a low temperature visibility bath where the temperature is thermostatically controlled down to -60°C. The mixture is considered miscible to a given temperature if none of the following conditions is observed: cloudiness, formation of floc or precipitate, separation into two liquid layers. The mixture is considered immiscible if any of these conditions is observed.

In the data included in the examples, miscibility temperature refers to the lowest temperature at which miscibility is observed at the given composition. The highest of these temperatures is the miscibility value for working fluids having that ester lubricant.

For mixtures of acids, average effective carbon chain length (AECL) is calculated by using the formula:

$$AECL = \frac{[W_1(ECL_1)] + [W_2(ECL_2)] + ...[W_n(ECL_n)]}{(W_1 + W_2 + ...+ W_n)}$$

where $W_1$ is the weight of first acid in the mixture and $ECL_1$ is its effective carbon chain length, $W_2$ is the weight of the second acid in the mixture and $ECL_2$ is its effective carbon chain length and this formula is continued for the "n" number of acids in a mixture. The formula is therefore the weighted average of the individual effective carbon chain lengths for every acid in a mixture of acids.

An essential aspect of this invention is that the branched $C_7$-$C_{10}$ alkyl monocarboxylic or monoalkanoic acid have at least 50% or more methyl branches based on the total number of branched alkyl groups, when the acid is esterified with monopentaerythritol, technical grade pentaerythritol or dipentaerythritol. The acids useful herein may be represented by the formula RCOOH where R represents a linear or branched alkyl group such that the total number of carbon atoms in the acid is 7 to 10. The presence of a branched acid is required for the invention and it has been discovered that the branched acid should have 50% or more methyl branches based on the total number of alkyl branches in the molecule when esters of the pentaerythritols noted above are used. For trimethylolpropane esters, other alkyl branched acids are satisfactory, but 50% or more methyl branching is preferred.

Branched acids having 100% methyl branching are preferred and 3,5,5-trimethylhexanoic acid is particularly preferred for use in this invention.

Thus, acids such as 2-ethylhexanoic acid, which is 100% ethyl branched, are not suitable for use in the invention with the pentaerythritols since they will not provide the required miscibility value to the refrigeration working fluid.

Branched alkyl groups refer to the numerical total of all the alkyl grounds in the molecule which are pendant to the backbone alkyl, i.e., the longest linear carbon chain in the acid molecule, meaning the carbon chain attached to and including the carboxyl carbon (-C(:O)OH).

When mixtures of acids are referred to herein the percentage by weight is based on the total weight of the acids, linear and branched, which are used to react with the particular polyol.

The present invention avoids the use of esters of relatively lower ($C_2$-$C_6$) alkyl carboxylic acids as lubricants, since such lower acids are more volatile, more odorous, and their esters exhibit greater solvation power and are more hydrophilic, all of which are undesirable properties and can result in refrigeration working fluids which have disadvantages. The use of relatively higher alkyl acids such as $C_7$-$C_{10}$ branched and linear alkyl monocarboxylic acids is desirable because the backbone alkyl length and the branchiness provides a desired viscosity to the ester lubricant. The resulting ester of such acids is less hydrophilic, and using acids in this range permits a broader range of polyols to be used because of the viscosity advantage. However, only acids having the effective carbon chain length and degree of methyl branching (for use with pentaerythritols) as noted above will provide esters which, when admixed with tetrafluoroethane refrigerants, e.g. R134a, will result in refrigeration working fluids which have satisfactory miscibility values. Thus, it is not the total number of carbon atoms in the acid or the relative amounts of branched acids or linear acids which provide esters which, when admixed with R134a, have satisfactory miscibility values, rather it is the effective carbon chain length of the acid or the average effective carbon chain length of a mixture of acids which are the key parameters, and the effective carbon chain length parameter will vary somewhat depending upon the polyol which is being employed to form the ester.

The preferred acids for use in this invention are:

(a) 3,5,5-trimethylhexanoic acid, which is useful only with trimethylpropane, mono- and technical grade pentaerythritol;

(b) a mixture of $C_7$ acids composed of 60-75 wt. % n-heptanoic acid, 18-30 wt.% 2-methyl-hexanoic acid, 5-10 wt.% 2-ethylpentanoic acids and 0-5 wt.% other heptanoic acid isomers, this $C_7$ acid mixture being useful only with trimethylolpropane; and

(c) methylhexanoic acid, which is defined herein as an isomeric mixture composed of 70 wt.% 2-methylhexanoic acid, 20 wt.% 2-ethyl-pentanoic acid, 5 wt.% n-heptanoic acid, the balance other isomers of heptanoic acid. Methylhexanoic acid as defined herein is useful with all the polyol embodiments of this invention.

When using 3,5,5-trimethylhexanoic acid, it may be desirable, depending on the exact viscosity required, to add to it very minor amounts, e.g. 1-10 wt.%, of another acid, such as the mixture of $C_7$ acids referred to above, to improve the low temperature properties of the ester product.

Esters for use in the invention are prepared by reacting alcohols with acids, preferably a molar excess of acid, using esterification techniques well known in the art at elevated temperatures. Catalysts such as organotin or organotitanium catalysts may be used if desired. The particular method for preparing esters useful in the invention is not critical to the practice of this invention, so long as substantially complete esterification is achieved.

As is well known in the art, the suitable ester lubricants of this invention may contain very minor proportions of various special purpose additives, up to about 8% weight cumulatively, such as metal deactivators, antioxidants, corrosion inhibitors, defoaming agents, anti-wear agents, extreme pressure resistant additives, viscosity improvers, and the like.

The invention is further illustrated by the following examples which are not to be considered as limitative of its scope.

## Example 1

Esters of monopentaerythritol with various acids were prepared and mixed with R134a; the ester viscosity, miscibility temperatures, miscibility value and average effective carbon chain length (AECL) values are given in Table 1.

Iso-octanoic acid is a mixture of $C_8$ isomers having the AECL as indicated; iso-nonanoic acid is a mixture of $C_9$ isomers having the AECL as indicated. These data show the criticality of AECL in providing miscible mixtures of ester and R134a. Acid E, 2-ethylhexanoic acid, does not provide a suitable working fluid because it has no methyl branching, which is required for preparing esters of pentaerythritol, technical grade pentaerythritol or dipentaerythritol.

TABLE 1

| Acid | AECL | wt.% Lubricant | wt% R134a | Miscibility Temperature | cSt. 40°C Viscosity | Miscibility Value |
|---|---|---|---|---|---|---|
| A. n-octanoic | 8.0 | 10.0 | 90.0 | none | 25.65 | none |
| | | 23.8 | 76.2 | none | | |
| | | 47.6 | 52.4 | none | | |
| B. 3,5,5-trimethylhexanoic | 6.0 | 5.2 | 94.8 | -58°C | 114.02 | -36°C |
| | | 9.6 | 90.4 | -36°C | | |
| | | 10.4 | 89.6 | -38°C | | |
| | | 27.0 | 73.0 | -38°C | | |
| C. Iso-octanoic | 6.2 | 5.8 | 94.5 | -38°C | 54.64 | -28°C |
| | | 10.3 | 89.7 | -28°C | | |
| | | 25.0 | 75.0 | -28°C | | |
| D. Iso-nonanoic | 7.2 | 4.2 | 95.8 | +12°C | 73.42 | none |
| | | 10.0 | 90.0 | +42°C | | |
| | | 25.0 | 75.0 | none | | |
| E. 2-ethylhexanoic | 6.0 | 4.2 | 95.8 | -32°C | 45.02 | - 8°C |
| | | 10.2 | 89.8 | -13°C | | |
| | | 25.6 | 74.4 | - 8°C | | |
| F. Iso-heptanoic | 5.8 | 4.4 | 95.6 | -53°C | 33.70 | -28°C |
| | | 10.1 | 89.9 | -32°C | | |
| | | 24.4 | 75.6 | -28°C | | |
| Note: The term "none" means that the ester and refrigerant are not miscible between -60°C and +60°C. | | | | | | |

Example 2

Esters of trimethylolpropane with various acids were prepared and mixed with R134a as in Example 1, and the data are given in Table 2.

These data also indicate the extreme variation in miscibility values where the acid does not have the AECL established to be critical for use with trimethylolpropane.

TABLE 2

| Acid | AECL | wt.% Lubricant | wt% R134a | Miscibility Temperature | cSt. 40°C Viscosity | Miscibility Value |
|---|---|---|---|---|---|---|
| A. n-C$_7$, n-C$_8$, n-C$_{10}$ mixture | 8.0 | 10.8 | 89.2 | none | 16.91 | none |
| | | 24.4 | 75.6 | +25°C | | |
| | | 50.0 | 50.0 | +25°C | | |
| B. Methylhexanoic (isomeric mixture) | 5.7 | 4.8 | 95.2 | -60°C | 19.23 | -52°C |
| | | 9.5 | 90.5 | -52°C | | |
| | | 24.4 | 75.6 | -55°C | | |
| | | 47.6 | 52.4 | -60°C | | |
| C. 30% n-C$_7$ + 70% methylhexanoic | 6.1 | 4.4 | 95.6 | -55°C | 14.58 | -38°C |
| | | 10.0 | 90.0 | -42°C | | |
| | | 25.6 | 74.4 | -38°C | | |
| D. 70% n-C$_7$ + 30% methylhexanoic | 6.6 | 4.3 | 95.7 | -43°C | 14.12 | -23°C |
| | | 10.1 | 89.9 | -33°C | | |
| | | 25.0 | 75.0 | -23°C | | |
| E. Iso-nonanoic | 7.2 | 4.6 | 95.4 | -18°C | 40.31 | + 8°C |
| | | 10.1 | 89.9 | - 2°C | | |
| | | 18.5 | 81.5 | + 8°C | | |
| F. 3,5,5-trimethylhexanoic | 6.0 | 4.2 | 95.8 | -60°C | 52.44 | - 36°C |
| | | 10.1 | 89.9 | -53°C | | |
| | | 25.6 | 74.4 | -36°C | | |
| G. 2-ethylhexanoic | 6.0 | 4.3 | 95.7 | -42°C | 24.66 | -23°C |
| | | 10.1 | 89.9 | -28°C | | |
| | | 25.6 | 74.4 | -23°C | | |
| H. 63% n-C$_7$ + 37% methylhexanoic | 6.5 | 4.3 | 95.7 | -48°C | 14.14 | -28°C |
| | | 10.1 | 89.9 | -32°C | | |
| | | 25.0 | 75.0 | -28°C | | |
| I. Iso-heptanoic | 5.8 | 5.0 | 95.0 | -60°C | 19.42 | -42°C |
| | | 10.2 | 89.8 | -48°C | | |
| | | 25.0 | 75.0 | -42°C | | |
| J. Iso-octanoic | 6.2 | 4.6 | 95.4 | -42°C | 29.71 | -22°C |
| | | 10.1 | 89.9 | -28°C | | |
| | | 11.6 | 88.4 | -28°C | | |
| | | 25.0 | 75.0 | -22°C | | |

Note: Methylhexanoic acid as used in all the examples refers to an isomeric mixture of 70 wt% 2-methylhexanoic acid, 20 wt% 2-ethylpentanoic acid, 5 wt% n-heptanoic acid and the balance other heptanoic acid isomers.

## Example 3

Esters of technical grade pentaerythritol with various acids were prepared and mixed with R134a as in Example 1, and the data are given in Table 3.

TABLE 3

| Acid | AECL | wt.% Lubricant | wt% R134a | Miscibility Temperature | cSt. 40°C Viscosity | Miscibility Value |
|---|---|---|---|---|---|---|
| A. 3,5,5-trimethyl-hexanoic | 6.0 | 4.2 | 95.8 | -48°C | 130.90 | -23°C |
| | | 12.2 | 87.8 | -33°C | | |
| | | 25.0 | 75.0 | -23°C | | |
| B. (1)* Methylhexanoic | 5.7 | 5.0 | 95.0 | -56°C | 26.24 | -42°C |
| | | 10.5 | 89.5 | -48°C | | |
| | | 23.8 | 76.2 | -42°C | | |
| | | 50.0 | 50.0 | -49°C | | |
| B. (2)* Methylhexanoic | 5.7 | 9.6 | 90.4 | -39°C | 28.46 | -32°C |
| | | 10.5 | 89.5 | -42°C | | |
| | | 11.1 | 88.9 | -39°C | | |
| | | 23.3 | 76.7 | -35°C | | |
| | | 26.3 | 73.7 | -32°C | | |
| | | 28.6 | 71.4 | -39°C | | |
| | | 50.0 | 50.0 | -59°C | | |
| | | 52.6 | 47.4 | -48°C | | |
| | | 76.9 | 23.1 | -60°C | | |
| | | 90.9 | 9.1 | -60°C | | |
| C. Iso-heptanoic | 5.8 | 5.3 | 94.7 | -45°C | 46.50 | -35°C |
| | | 9.4 | 90.6 | -35°C | | |
| | | 25.0 | 75.0 | -45°C | | |
| | | 50.0 | 50.0 | -45°C | | |

* Different batches of technical grade pentaerythritol.

## TABLE 3 (CONTINUED)

| Acid | AECL | wt.% Lubricant | wt% R134a | Miscibility Temperature | cSt. 40°C Viscosity | Miscibility Value |
|---|---|---|---|---|---|---|
| D. Iso-octanoic | 6.2 | 4.8 | 95.2 | -28°C | 62.70 | -3°C |
| | | 10.2 | 89.8 | -12°C | | |
| | | 24.4 | 75.6 | - 3°C | | |
| | | 50.0 | 50.0 | -12°C | | |
| E. 25% neo-heptanoic + 75% n-heptanoic | 6.3 | 11.4 | 88.6 | -8°C | 28.05 | -3°C |
| | | 23.8 | 76.2 | -3°C | | |
| | | 25.6 | 74.4 | -5°C | | |
| | | 50.0 | 50.0 | -28°C | | |
| F. n-heptanoic | 7.0 | 4.6 | 95.4 | -15°C | 23.59 | +8°C |
| | | 10.5 | 89.5 | + 3°C | | |
| | | 20.8 | 79.2 | + 8°C | | |
| | | 47.6 | 52.4 | -10°C | | |
| G. Iso-nonanoic | 7.2 | 4.4 | 95.6 | +18°C | 83.92 | none |
| | | 10.0 | 90.0 | none | | |
| | | 25.0 | 75.0 | none | | |
| H. 85% methyl-hexanoic + 15% iso-octanoic | 5.8 | 10.9 | 89.1 | -35°C | 33.82 | -31°C |
| | | 23.8 | 76.2 | -31°C | | |
| | | 52.6 | 47.4 | -59°C | | |
| I. 2-ethylhexanoic | 6.0 | 4.3 | 95.7 | -33°C | 51.83 | -8°C |
| | | 9.9 | 90.1 | -8°C | | |
| | | 25.0 | 75.0 | -8°C | | |

EP 0 786 512 A2

Example 4

Esters of dipentaerythritol with various acids were prepared and mixed with R134a as in Example 1, and the data are given in Table 4.

TABLE 4

| Acid | AECL | wt.% Lubricant | wt% R134a | Miscibility Temperature | cSt. 40°C Viscosity | Miscibility Value |
|---|---|---|---|---|---|---|
| A. n-heptanoic | 7.0 | 3.6 | 96.4 | +10°C | 58.93 | none |
| | | 8.5 | 91.5 | none | | |
| | | 22.2 | 77.8 | none | | |
| | | 50.0 | 50.0 | +10°C | | |
| B. Methylhexanoic | 5.7 | 11.0 | 89.0 | -23°C | 88.87 | -18°C |
| | | 23.8 | 76.2 | -18°C | | |
| | | 47.6 | 52.4 | -39°C | | |
| C. Iso-octanoic | 6.2 | 4.8 | 95.2 | +12°C | 168.87 | none |
| | | 10.6 | 89.4 | +25°C | | |
| | | 30.3 | 69.7 | none | | |
| D. 3,5,5-trimethylhexanoic | 6.0 | 4.3 | 95.7 | -18°C | 391.64 | +12°C |
| | | 10.1 | 89.9 | - 3°C | | |
| | | 27.0 | 73.0 | +12°C | | |
| E. 15% neo-heptanoic + 85% methylhexanoic | 5.5 | 10.9 | 89.1 | -18°C | 113.68 | -17°C |
| | | 21.7 | 78.3 | -17°C | | |
| | | 47.6 | 52.4 | -40°C | | |

The ester lubricants of the present invention may also be mixed and used as lubricants with tetrafluoroethane refrigerants to provide useful working fluids. Such mixtures may be desirable when specific viscosity ranges need to be achieved for a particular end use application, since blending esters allows more control in achieving the exact viscosity of the desired product. Blends of esters of the invention may comprise about 1-99 wt% of each ester and said blends will retain their miscibility values of -20°C or less, or -15°C or less, if dipentaerythritol is a component of the blend.

Thus, a further embodiment of this invention is a refrigeration working fluid comprising about 5-55 parts by weight of a synthetic ester lubricant and 95-45 parts by weight of a tetrafluoroethane refrigerant, the lubricant being a mixture of two or more esters of the group consisting of:

a) esters of monopentaerythritol with (i) a branched $C_7$-$C_{10}$ alkyl monocarboxylic acid or (ii) a mixture of up to 73 wt% of a linear $C_7$-$C_{10}$ alkyl monocarboxylic acid and 27 wt% of a branched $C_7$-$C_{10}$ monocarboxylic acid, said branched acid having an average effective carbon chain length equal to or less than 6.2,

b) esters of technical grade pentaerythritol with (i) a branched $C_7$-$C_{10}$ alkyl monocarboxylic or (ii) a mixture of up to 67 wt% of a linear $C_7$-$C_{10}$ alkyl monocarboxylic acid and 33 wt% or more of a branched $C_7$-$C_{10}$ alkyl monocarboxylic acid, said branched acid having an average effective carbon chain length equal to or less than 6.0,

c) esters of trimethylolpropane with (i) a branched $C_7$-$C_{10}$ alkyl monocarboxylic acid or (ii) a mixture of up to 85 wt% of a linear $C_7$-$C_{10}$ alkyl monocarboxylic acid and 15 wt% or more of a branched alkyl monocarboxylic acid, the branched acid having an average effective carbon chain length equal to or less than 7.0, and

d) esters of dipentaerythritol with (i) a branched $C_7$-$C_{10}$ alkyl monocarboxylic acid or (ii) a mixture of up to 10 wt% of a linear $C_1$-$C_{10}$ alkyl monocarboxylic acid and 90 wt% or more of a branched $C_7$-$C_{10}$ alkyl monocarboxylic acid, the branched acid having an average effective carbon chain length equal to or less than 5.7,

with the proviso that said branched acid contains 50% or more methyl branches, based on the total alkyl branches in the acid molecule, when said mixture contains said pentaerythritol, technical grade pentaerythritol or dipentaerythritol esters, and said refrigeration working fluid has a miscibility value of -20°C or lower for said mixtures containing only monopentaerythritol trimethylolpropane and technical grade pentaerythritol esters and a miscibility value of -15°C or lower when said mixtures contain dipentaerythritol, and the viscosity of said ester mixture is from 10 cSt. to 130 cSt. at 40°C.

A preferred mixed ester is a mixture of 32.2 wt% of the technical grade pentaerythritol ester of 3,5,5-trimethylhexanoic acid with 67.8 wt% of the trimethylolpropane ester of the same acid which is used to provide an ester lubricant having a viscosity at 40°C of about 68 cSt., which is a viscosity requirement for some commercial refrigeration units. Another preferred mixture comprises 76.9 wt% of the same technical grade pentaerythritol ester and 23.1 wt% of the same trimethylolpropane ester which provides a viscosity of about 100 cSt. at 40°C, which is a viscosity requirement for some automobile air conditioning lubricant esters. Another preferred mixture comprises a mixture of 58 wt% of the trimethylolpropane ester reported of acid D in Table 2 (70% n-$C_7$, 30% methylhexanoic) and 42 wt. % of the technical grade pentaerythritol ester of Acid A in Table 3 (3,5,5-trimethylhexanoic acid) which provides a viscosity of about 32 cSt., which is a viscosity requirement for some home refrigerator and freezer systems.

## Claims

1. A refrigeration working fluid comprising about 5-55 parts by weight of a synthetic ester lubricant and about 95-45 parts by weight of a tetrafluoroethane refrigerant, the ester having a viscosity range of from about 26 cSt. to 114 cSt. at 40°C and the working fluid having a miscibility value of -20°C or less, where the ester is prepared by reacting monopentaerythritol with (a) a branched $C_7$-$C_{10}$ alkyl monocarboxylic acid or (b) a mixture of up to 73% by weight of a linear $C_7$-$C_{10}$ alkyl monocarboxylic acid and 27% by weight or more of a branched $C_7$-$C_{10}$ alkyl monocarboxylic acid, said branched acid containing 50% or more of branched methyl groups based on the total number of branched alkyl groups in the acid molecule and said branched acid or acid mixture having an average effective carbon chain length equal to or less than 6.2.

2. The fluid of claim 1 wherein the refrigerant is 1,1,1,2-tetrafluoroethane.

3. The fluid of claim 1 wherein the branched acid is 3,5,5-trimethylhexanoic acid.

4. The fluid of claim 1 wherein the acid is methylhexanoic acid, said methylhexanoic acid being an isomeric mixture of about 70 wt% 2-methylhexanoic acid, about 20 wt% 2-ethyl-pentanoic acid, about 5 wt% n-heptanoic acid and the balance other isomers of heptanoic acid.

5. A. refrigeration working fluid comprising about 5-55 parts by weight of a synthetic ester lubricant and about 95-45 parts by weight of a tetrafluoroethane refrigerant, the ester having a viscosity range of from about 27 cSt. to 130 cSt. at 40°C, and the working fluid having a miscibility value of -20°C or less, wherein the ester is prepared by reacting technical grade pentaerythritol with (a) a branched $C_7$-$C_{10}$ alkyl monocarboxylic acid or (b) a mixture of up to 67% by weight of a linear $C_7$-$C_{10}$ alkyl monocarboxylic acid and 33% by weight or more of a branched $C_7$-$C_{10}$ monocarboxylic acid, said branched acid containing 50% or more of branched methyl groups based on the total number of branched alkyl groups in the acid molecule and said branched acid or acid mixture having an average effective carbon chain length equal to or less than 6.0, and said technical grade pentaerythritol containing 85-92% by weight monopentaerythritol, 14-7% by weight dipentaerythritol and up to 2% by weight tripentaerythritol.

6. The fluid of claim 5 wherein the refrigerant is 1,1,1,2-tetrafluoroethane.

7. The fluid of claim 5 wherein the branched acid is 3,5,5-trimethylhexanoic acid.

8. The fluid of claim 5 wherein the acid is methylhexanoic acid, said methylhexanoic acid being an isomeric mixture of about 70 wt% 2-methylhexanoic acid, about 20 wt% 2-ethyl-pentanoic acid, about 5 wt% n-heptanoic acid and the balance other isomers of heptanoic acid.

9. A refrigeration working fluid comprising about 5-55 parts by weight of a synthetic ester lubricant and about 95-45 parts by weight of a tetrafluoroethane refrigerant, the ester having a viscosity range of from about 10 cSt. to 55 cSt. at 40°C and the working fluid having a miscibility value of -20°C or less, wherein the ester is prepared by reacting trimethylolpropane with (a) a branched $C_7$-$C_{10}$ alkyl monocarboxylic acid and (b) a mixture of up to 85% by weight of a linear $C_7$-$C_{10}$ alkyl monocarboxylic acid and 15% or more of a branched $C_7$-$C_{10}$ alkyl monocarboxylic acid, and said branched acid or acid mixture having an effective carbon chain length equal to or less than 7.0.

10. The fluid of claim 9 wherein the refrigerant is 1,1,1,2-tetrafluoroethane.

11. The fluid of claim 9 wherein the branched acid is 3,5,5-trimethylhexanoic acid.

12. The fluid of claim 9 wherein the acid is methylhexanoic acid, said methylhexanoic acid being an isomeric mixture of about 70 wt% 2-methylhexanoic acid, about 20 wt% 2-ethyl-pentanoic acid, about 5 wt% n-heptanoic acid and the balance other isomers of heptanoic acid.

13. The fluid of Claim 9 wherein the acid is a mixture of $C_7$ acids composed of 60-75 wt.% n-heptanoic acid, 18-30 wt.% 2-methylhexanoic acid, 5-10 wt.% 2-ethylpentanoic acid and 0-5 wt.% other heptanoic acid isomers.

14. A refrigeration working fluid composition comprising about 5-55 parts by weight of a synthetic ester lubricant and about 95-45 parts by weight of a tetrafluoroethane refrigerant, the ester having a viscosity of from 80 cSt. to 120 cSt. at 40°C and the working fluid having a miscibility value of -15°C or less, where the ester is prepared by reacting dipentaerythritol with (a) a branched $C_7$-$C_{10}$ alkyl monocarboxylic acid or (b) a mixture of 90% by weight or more of a branched $C_7$-$C_{10}$ alkyl monocarboxylic acid and up to 10% by weight of a linear $C_7$-$C_{10}$ alkyl monocarboxylic acid, said branched acid containing 50% or more branched methyl groups based on the total number of branched alkyl groups in the acid molecule and said branched acid or acid mixture having an average effective carbon chain length equal to or less than 5.7.

15. The fluid of claim 14 wherein the refrigerant is 1,1,1,2-tetrafluoroethane.

16. The fluid of claim 14 wherein the branched acid is methylhexanoic acid, said methylhexanoic acid being an isomeric mixture of about 70 wt.% 2-methylhexanoic acid, 20 wt.% 2-ethylpentanoic acid, about 5 wt.% n-heptanoic acid and the balance other isomers of heptanoic acid.

17. Refrigeration working fluid comprising about 5-55 parts by weight of a synthetic ester lubricant and 95-45 parts by weight of a tetrafluoroethane refrigerant, the lubricant being a mixture of two or more esters of the group consisting of:

a) esters of monopentaerythritol with (i) a branched $C_7$-$C_{10}$ alkyl monocarboxylic acid or (ii) a mixture of up to 73 wt% of a linear $C_7$-$C_{10}$ alkyl monocarboxylic acid and 27 wt% of a branched $C_7$-$C_{10}$ monocarboxylic acid, said branched acid having an average effective carbon chain length equal to or less than 6.2,
b) esters of technical grade pentaerythritol with (i) a branched $C_7$-$C_{10}$ alkyl monocarboxylic or (ii) a mixture of up to 67 wt% of a linear $C_7$-$C_{10}$ alkyl monocarboxylic acid and 33 wt% or more of a branched $C_7$-$C_{10}$ alkyl monocarboxylic acid, said branched acid having an average effective carbon chain length equal to or less than 6.0,
c) esters of trimethylolpropane with (i) a branched $C_7$-$C_{10}$ alkyl monocarboxylic acid or (ii) a mixture of up to 85 wt% of a linear $C_7$-$C_{10}$ alkyl monocarboxylic acid and 15 wt% or more of a branched $C_7$-$C_{10}$ alkyl monocarboxylic acid, the branched acid having an average effective carbon chain length equal to or less than 7.0, and
d) esters of dipentaerythritol with (i) a branched $C_7$-$C_{10}$ alkyl monocarboxylic acid or (ii) a mixture of up to 10 wt% of a linear $C_7$-$C_{10}$ alkyl monocarboxylic acid and 90 wt% or more of a branched $C_7$-$C_{10}$ alkyl monocarboxylic acid, the branched acid having an average effective carbon chain length equal to or less than 5.7,

with the proviso that said branched acid contains 50% or more methyl branches, based on the total alkyl branches in the acid molecule, when said mixture contains said pentaerythritol, technical grade pentaerythritol or dipentaerythritol esters, and said working fluid has a miscibility value of -20°C or lower for said mixtures containing only monopentaerythritol, technical grade pentaerythritol and trimethylolpropane esters and a miscibility value of -15°C or lower when said mixtures contain dipentaerythritol, and the viscosity of said ester mixture is from 10 cSt. to 130 cSt. at 40°C.